Europäisches Patentamt

European Patent Office

Office européen des brevets

(11) Veröffentlichungsnummer: **0 198 887 B1**

(12) **EUROPÄISCHE PATENTSCHRIFT**
veröffentlicht nach Art. 158 Abs. 3
EPÜ

(45) Veröffentlichungstag der Patentschrift: **03.04.91**

(51) Int. Cl.5: **B60G 11/12,** F16F 1/18,
B29C 67/18

(21) Anmeldenummer: **85905308.4**

(22) Anmeldetag: **23.10.85**

(86) Internationale Anmeldenummer:
**PCT/AT85/00042**

(87) Internationale Veröffentlichungsnummer:
**WO 86/02601 (09.05.86 86/10)**

(54) **KUNSTSTOFF-BLATTFEDER, SOWIE VERFAHREN ZU DEREN HERSTELLUNG.**

(30) Priorität: **25.10.84 AT 3418/84**

(43) Veröffentlichungstag der Anmeldung:
**29.10.86 Patentblatt 86/44**

(45) Bekanntmachung des Hinweises auf die
Patenterteilung:
**03.04.91 Patentblatt 91/14**

(84) Benannte Vertragsstaaten:
**AT BE CH DE FR GB IT LI NL SE**

(56) Entgegenhaltungen:
**EP-A- 0 070 122**
**EP-A- 0 092 949**
**EP-A- 0 106 249**

**Patents Abstracts of Japan, Band 7, Nr.153,**
**(M-226)(1298) 5. Juli 1983, & JP, A, 5861343**
**(MITSUBISHI RAYON K.K.)**

(73) Patentinhaber: **ISOSPORT VERBUNDBAUTEILE**
**Ges.m.b.H.**
**Industriestrasse 2**
**A-7000 Eisenstadt(AT)**

(72) Erfinder: **WOLTRON, Herbert**
**Babenbergerstrasse 70/12**
**A-2340 Mödling(AT)**

(74) Vertreter: **Stampfer, Heinz**
**ISOVOLTA Österreichische Isolierstoffwerke**
**AG Industriezentrum-Süd**
**A-2351 Wiener Neudorf(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Kunststoff-Blattfeder mit zumindest einem Federaugenkörper, der zumindest zwei gegebenenfalls plattenförmig ausgebildete Halterungsbereiche aufweist, die paarweise einander gegenüberliegende angeordnet an der Ober- und Unterseite eines Federkörper-Endbereiches anliegen und mit Hilfe von zumindest einer über sie geschobenen Klemmanschette auf diesem Federkörper-Endbereich aufgekeilt ist. Die Erfindung betrifft ferner ein vorteilhaftes Verfahren zur Herstellung einer solchen Kunststoff-Blattfeder.

Eine Kunststoff-Blattfeder dieser Art ist nun aus der EP-A 92949 bekannt. Der anhand von Fig. 9 dieser EP-A beschriebene Federaugenkörper weist einen Augenbereich auf, der mit zwei eine Montageplatte bildenden Halterungsflanschen versehen ist, die an der Oberseite des Federaugen-Endbereiches anliegen. An seiner Unterseite ist dieser Endbereich keilförmig abgeschrägt, so daß seine Dicke zum Federende hin abnimmt. An diese keilförmig abgeschrägte Unterseite des Federaugenbereiches liegt nun eine keilförmig ausgebildete zweite Halterungsplatte an, welche die Schräge des Endbereiches ausgleicht. Über die beiden Halterungsflanschen und die keilförmige zweite Halterungsplatte sind zwei Klemmanschetten geschoben und die Befestigung des Federaugenkörpers erfolgt durch Einkeilen der zweiten Halterungsplatte. Bei einer sicheren Befestigung treten nun zwischen der keilförmigen zweiten Halterungsplatte und den Halterungsflanschen einerseits, und der Ober-bzw. Unterseite des Federkörper-Endbereiches andererseits, hohe Flächenpressungen auf, welche zu einem Ablösen von Schichtteilen oder Verstärkungsfasern von bzw. aus den so beanspruchten Oberflächen führen kann.

Hier will die Erfindung Abhilfe schaffen. Die Erfindung, wie sie in den Ansprüchen gekennzeichnet ist, löst einerseits die Aufgabe. eine Kunststoff-Blattfeder der eingangs der Beschreibung genannten Art anzugeben, bei welcher bei der Befestigung der Federaugenkörper an den Federaugen-Endbereichen so hohe Flächenpressungen nicht mehr erforderlich sind. Die Erfindung löst ferner die Aufgabe, ein vorteilhaftes Verfahren zum Herstellen der erfindungsgemäßen Blattfeder anzugeben.

Bei der Herstellung der Kunststoff-Blattfeder geht man z.B.von einem Federkörper aus glasfaserverstärktem Epoxydharz aus, Hie er z.B. in der europäischen Patentanmeldung Nr. 83109842.1 (Veröff.Nr.106 249) beschrieben ist.

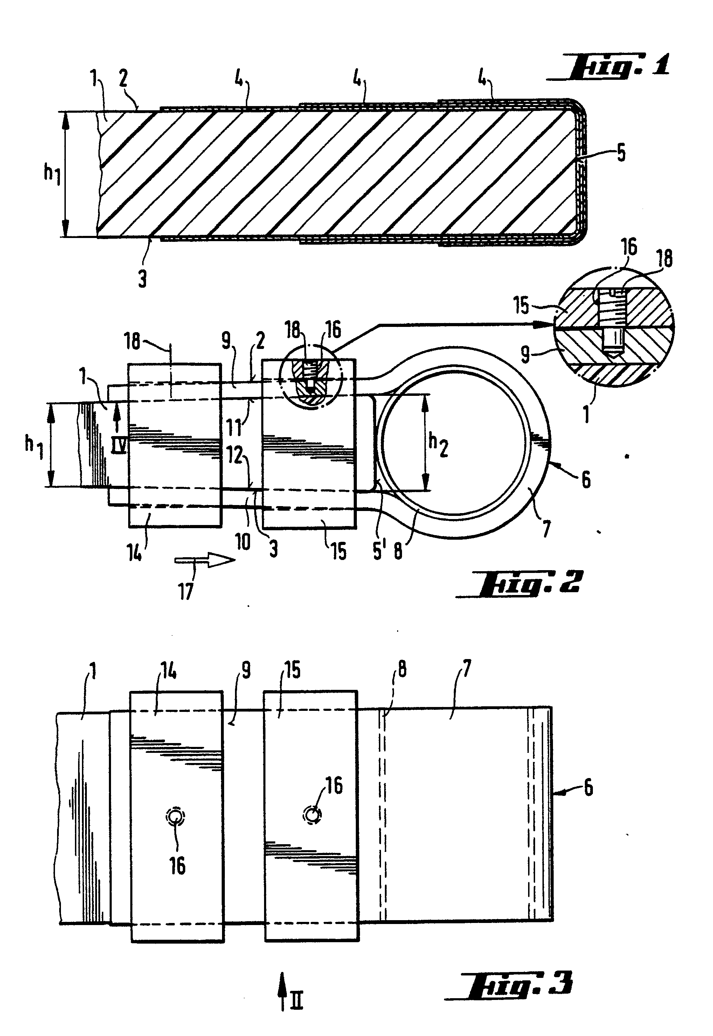

Fig. 1 zeigt in vergrößertem Maßstab im Schnitt den Endbereich 1 eines solchen Federkörpers, welcher zunächst zueinander planparallele, mit einem Rauhschliff versehene Ober- und Unterseiten 2 bzw. 3 aufweist. Diese Blattfedern haben z.B. eine Breite von 60 mm und an diesem Endbereich 1 eine Dicke $h_1$ = 20 mm.Zur Herstellung einer Verdickung am Federkörper-Endbereich 1 werden nun z.B. drei mit flüssigem Epoxydharz mit einem Harzauftrag von 40% (Feststoff) imprägnierte Glasfaser-Rovinggewebe 4 mit einem Kette zu Schußverhältnis 1:1 und einem Flächengewicht von 500 g/m² in Blattfederbreite und in unterschiedlichen Längen aufeinander gestapelt und dieser Stapel, wie in Fig. 1 dargestellt, U-förmig um das Federende 5 gelegt, derart, daß die beiden U-Schenkel sich an die Ober- und Unterseite 2 bzw. 3 des Federkörper-Endbereiches 1 anlegen, so daß sie dort jeweils eine dünne Auflage bilden, deren Dicke in Richtung auf das Federende 5 zu stufenweise zunimmt.

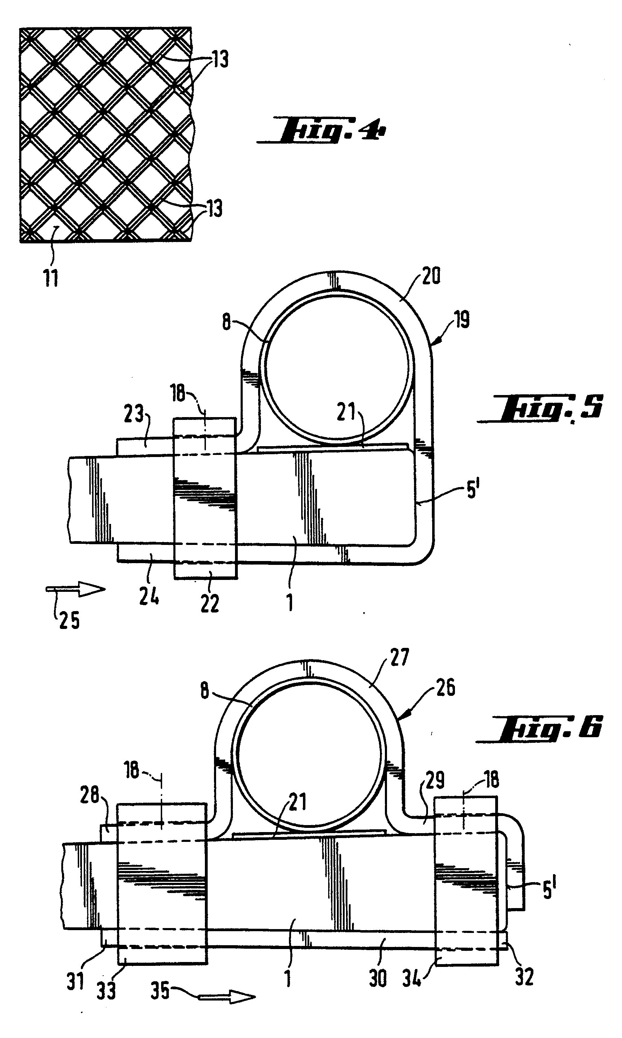

In den Figuren 2 und 3 ist nun der Blattfeder-Endbereich 1, nachdem er mit einem zur Krafteinleitung in das Federende dienenden Federaugenkörper 6 versehen wurde, in Auf-bzw. Grundriß schematisch dargestellt. Dieser Federaugenkörper 6 umfaßt ein U-förmiges Stahlbandstück 7, das in seiner aufgeweiteten U-Krümmung sich an die Mantelfläche einer Federaugenbuchse 8 aus Stahl anschmiegt, welche sich ihrerseits an dem stumpfen Federende 5' abstützt. Die beiden Schenkel des U-förmigen Stahlbandstückes 7 bilden Halterungsbereiche 9, 10 und weisen an ihren an der Ober-und Unterseite 2 bzw. 3 des Federkörper-Endbereiches 1 anliegenden Anpreßflächen 11, 12 eine durch eingearbeitete Nuten 13 gebildete reliefartige Oberflächenstruktur auf. Fig. 4 zeigt die Anordnung der Nuten 13 in einer Teildarstellung als Aufsicht in Richtung des Pfeiles IV in Fig.2.

Zum Anbringen des Federaugenkörpers 6 an den Federkörper-Endbereich 3 werden zunächst zwei Klemmanschetten 14, 15, die jeweils aus einem eine Gewindebohrung 16 aufweisenden, gehärteten Stahl-Vierkantrohrstück bestehen, gegen die Richtung des Pfeiles 17 lose auf den Federkörper aufgeschoben und danach - wie schon anhand von Fig. 1 beschrieben - die mit Epoxydharz imprägnierten Rovinggewebe 4 auf den Federkörper-Endbereich 1 aufgebracht. Anschließend wird das U-förmige Stahlband 7 samt der Federaugenbuchse 8 auf den Federkörper-Endbereich 1 aufgesetzt, die beiden Klemmanschetten 15 und 14 nacheinander in Richtung des Pfeiles 17 auf die beiden Halterungsbereiche 9, 10 des Stahlbandstückes 7 aufgeschoben und dort aufgekeilt. Danach wird der Halterungsbereich 9 durch die Gewindebohrungen 16 in den Klemmanschetten 14, 15 hindurch angebohrt und in den Gewindebohrungen 16 dann Wurmschrauben 18 angebracht, welche in die Bohrungen in Halterungsbereich 9 hineinreichen und so die Klemmanschetten 14, 15 gegen ein Verschieben sichern.

Durch das Aufkeilen der Klemmanschetten 14, 15 auf die Halterungsbereiche 9, 10 des Stahlbandstücks 7 werden die genuteten Anpreßflächen 11, 12 der Halterungsbereiche 9, 10 mit großer Kraft auf die mit Epoxydharz imprägnierten Glasfaser-Rovinggewebe aufgepreßt, wobei diese so verformt werden, daß sie an der Ober- und Unterseite 2 bzw. 3 des Federkörper-Endbereichs 1 keilförmige Auflagen bilden, wobei Epoxydharz in die Nuten 13 der Anpreßflächen 11, 12 der Halterungsbereiche 9, 10 eindringt. Zusammen mit diesen keilförmigen Auflagen nimmt der Federkörper-Endbereich 1 bei dem vorliegenden Beispiel von einer Dicke $h_1$ = 20 mm auf eine Dicke $h_2$ = 23 mm gegen das Feder-ende 5' hin zu. Zur beschleunigten Aushärtung dieser Auflagen wird der nun mit Federaugenkörpern 6 versehene Federkörper z.B. in einem Heißluftofen kurzzeitig auf eine Temperatur von 80° C erhitzt, bei der die Härtungsreaktion des Epoxydharzes eingeleitet wird, wonach es rasch aushärtet und die vorgenannten keilförmigen Auflagen sich mit dem Epoxydharzmaterial des Federkörpers verbinden, so daß keine Fuge zu erkennen ist. Zwischen dem Federkörper-End bereich 1 und dem angebrachten Federaugenkern 6 herrscht nun eine form- und kraftschlüssige Verbindung und die Kunststoff-Blattfeder ist im wesentlichen gebrauchsfertig.

Fig. 5 zeigt nun schematisch im Aufriß den Federkörper-Endbereich 1 mit aufgebrachtem Federaugenkörper 19 einer anderen vorteilhaften Realisierung der erfindungsgemäßen Kunststoff-Blattfeder. Bei dieser Realisierung umfaßt der Federaugenkörper 19 ein gebogenes und gehärtetes Stahlbandstück 20 sowie eine Federaugenbuchse 8, eine Zwischenlage 21 und eine Klemmanschette 22, die alle ebenfalls aus Stahl bestehen. Die als Halterungsbereiche 23, 24 dienenden geraden Enden des gebogenen Stahlbandstücks 20 sind an ihren an den Federkörper-Endbereich 1 anliegenden Anpreßflächen in ähnlicher Weise wie bei der Realisierung gemäß den Figuren 2 und 3 mit einer genuteten reliefartigen Oberflächenstruktur versehen (siehe Fig. 4).

Für das Anbringen des Federaugenkörpers 19 wird zunächst die Klemmanschette 22 gegen Richtung des Pfeiles 25 lose auf den Federkörper aufgeschoben und danach - wie anhand von Fig. 1 erläutert - mit Epoxydharz imprägnierten Glasfaser-Rovinggewebe auf den Federkörper-Endbereich 1 aufgebracht. Anschließend werden das Stahlbandstück 20 samt der Zwischenlage 21 und der Federaugenbuchse 8 auf den Federkörper-Endbereich 1 aufgesetzt und danach die Klemmanschette 22 in Richtung des Pfeiles 25 auf die beiden Halterungsbereiche 23, 24 des Stahlbandstücks 20 aufgeschoben und dort aufgekeilt. Die Klemmanschette 22 wird dann mittels einer Wurmschraube 18 gegen Verschiebung gesichert und das in den Glasfaser-Rovinggeweben enthaltene Epoxyd harz ausgehärtet, beides analog wie bei der anhand der Figuren 2 und 3 beschriebenen Federvariante.

Eine weitere vorteilhafte Realisierung der erfindungsgemäßen Kunststoff-Blattfeder wird nun anhand von Fig. 6 beschrieben. Diese Figur zeigt schematisch im Aufriß den Federkörper-Endbereich 1 mit aufgebrachtem Federaugenkörper 26. Bei dieser Realisierung weist der Federaugenkörper 26 ein gebogenes Stahlbandstück 27 auf, das - in analoger Weise wie bei der Kunststoff-Blattfeder gemäß Fig. 5 - eine Federaugenbuchse 8 über eine Zwischenlage 21 an den gegen das Federende 5' hin in seiner Dicke keilförmig zunehmenden Federkörper-Endbereich 1 anpreßt. Das Stahlbandstück 27 liegt dabei mit zwei zu beiden Seiten der Federaugenbuchse 8 liegenden Halterungsbereichen 28 und 29 an der einen Seite des Federkörper-Endbereiches- 1 an und stützt sich außerdem an dem stumpfen Federende 5' ab. Außer diesem gebogenen Stahlbandstück 27 umfaßt der Federaugenkörper 26 noch ein gerades,zweites Stahlbandstück 30, welches an der anderen Seite des Federkörper-Endbereiches 1 anliegt und dessen Enden weitere Halterungsbereiche 31, 32 des Federaugenkörpers 26 bilden. Die an dem Federkörper-Endbereich 1 anliegenden Anpreßflächen der Halterungsbereiche 28, 29, 31 und 32 sind - ebenso wie anhand von Fig. 4 beschrieben - mit einer reliefartigen Oberflächenstruktur versehen. Zur Befestigung der beiden Stahlbandstücke 27 und 30 dienen zwei Klemmmanschetten 33 und 34, wobei die Klemmanschette 33 auf das Halterungsbereichpaar 28, 31 und die Klemmanschette 34 auf das Halterungsbereichpaar 29, 32 jeweils in Richtung des Pfeiles 35 aufgepreßt und dabei aufgekeilt ist. Wurmschrauben 18 sichern die Klemmmanschetten 33, 34 gegen ein Veschieben.

Das Herstellen der keilförmigen Verdickung des Federkörper-Endbereiches und das Aufbringen des Federaugenkörpers 26 erfolgt analog wie anhand der Figuren 1 bis 3 beschrieben.

Bei den vorstehend beschriebenen Ausführungen der Kunststoff-Blattfeder sind die Bestandteile der Federaugenkörper 6, 19 und 26 durchwegs aus Stahl hergestellt. Zum Zwecke einer Gewichtsverminderung können nun in diesen Federaugenkörpern die Stahlbandstücke 7, 20, 27 und 30 vorteilhaft durch entsprechend geformte Teile aus faserverstärktem duromeren Kunststoff, insbesondere Epoxydharz, ersetzt werden, in welchem hochfeste Verstärkungsfasern, wie Glasfasern, Kohlenstoffasern oder dgl. in Bandlängsrichtung verlaufen.

Für die Herstellung dieser bandförmigen Teile werden z.B. mehrere mit einem flüssigen Epoxydharz imprägnierte Glasgewebestücke übereinanderliegend in einem Formwerkzeug ausgehärtet. Dabei verwendet man z.B. ein Glasfaser-Rovinggewebe mit einem Kette zu Schußverhältnis 1:1 und einem Flächengewicht von 500 g/m², das mit einem Harzauftrag von 35% (Feststoff) versehen ist.

Die erfindinngsgemäßen Kunststoff-Blattfedern können in ähnlicher Weise wie die üblichen Stahlblattfedern in Kraftfahrzeugen eingesetzt werden. Gegenüber Stahlblattfedern bestehen ihre Vorteile vor allem in einem wesentlich geringeren Gewicht und darin, daß sie im Gebrauch keinerlei Korrosion unterliegen.

## Ansprüche

1. Kunststoff-Blattfeder mit zumindest einem Federaugenkörper, der zumindest zwei gegebenenfalls plattenförmig ausgebildete Halterungsbereiche aufweist, die paarweise einander gegenüberliegend angeordnet an der Ober- und Unterseite des Federkörper-Endbereiches anliegen und mit Hilfe von zumindest einer über sie geschobenen Klemmanschette auf diesen Federkörper-Endbereich aufgekeilt sind, dadurch gekennzeichnet, daß der Federkörper an seinen Endbereichen (1), auf denen die Federaugenkörper aufgekeilt sind, in seiner Dicke zum Federende (5') hin zunimmt.

2. Kunststoff-Blattfeder nach Anspruch 1, gekennzeichnet durch aufgekeilte Klemmanschetten, die, gegebenenfalls durch Schrauben (18) und/oder Stifte, gegen eine Verschiebung relativ zu den Halterungsbereichen gesichert sind.

3. Kunststoff-Blaftfeder nach Anspruch 1 oder 2, dadurch gekennzeichnet, daß sich der Federaugenkörper (6, 19, 26) an dem stumpfen Federende (5') abstützt.

4. Kunststoff-Blattfeder nach einem der Ansprüche 1 bis 3, dadurch gekennzeichnet, daß der Federaugenkörper (26) mindestens zwei voneinander getrennte Teile (27, 30) aufweist, die mit ihren Halterungsbereichen an der Oberbzw. Unterseite des Federkörper-Endbereiches (1) anliegen.

5. Kunststoff-Blattfeder nach einem der Ansprüche 1 bis 4, gekennzeichnet durch Halterungsbereiche, die an ihren an dem Federkörper-Endbereich (1) anliegenden Anpreßflächen (11, 12) eine, gegebenenfalls durch Nuten (13) gebildete, reliefartige Oberflächenstruktur aufweisen, in deren Vertiefungen Kunststoffmaterial des Federkörpers (1) eingedrungen ist.

6. Kunststoff-Blattfeder nach einem der Ansprüche 1 bis 5, gekennzeichnet durch zwei Klemmanschetten (14, 15), die auf dasselbe Halterungsbereichpaar aufgeschoben und aufgekeilt sind.

7. Kunststoff-Blattfeder nach einem der Ansprüche 1 bis 5, gekennzeichnet durch zwei Klemmanschetten (33, 34), die auf unterschiedliche Halterungsbereichpaare aufgeschoben und aufgekeilt sind.

8. Kunststoff-Blattfeder nach einem der Ansprüche 1 bis 7, dadurch gekennzeichnet, daß der Federaugenkörper ein gebogenes Bandstück (7, 20, 27) aus Stahl oder faserverstärktem Kunststoff aufweist, das in Teilbereichen, gegebenenfalls an seinen Endbereichen, die an den Federkörper-Endbereich (1) aufzukeilenden Halterungsbereiche umfaßt.

9. Kunststoff-Blattfeder nach Anspruch 8, dadurch gekennzeichnet, daß das Bandstück (7, 20, 27) mit einer Federaugenbuchse (8) verbunden ist, die sich direkt oder über eine Zwischenlage (21) an der Ober- oder Unter-Seite (2, 3) des Federkörper-Endbereiches (1) oder an dem stumpfen Federende (5') abstützt.

10. Kunststoff-Blattfeder nach Anspruch 9, dadurch gekennzeichnet, daß die Federaugenbuchse (8) zwischen zwei Klemmanschetten (33, 34) angeordnet ist.

11. Kunststoff-Blattfeder nach einem der Ansprüche 8 bis 10, dadurch gekennzeichnet, daß sich das gebogene Bandstücke (7, 20, 27) an einem Teil der Mantelfläche der Federaugenbuchse (8) anschmiegt.

12. Kunststoff-Blattfeder nach einem der Ansprüche 8 bis 11, dadurch gekennzeichnet, daß das gebogene Bandstück (27) mit der Federaugenbuchse (6) form- und/ oder kraftschlüssig verbunden ist.

13. Verfahren zur Herstellung einer Kunststoff-Blattfeder, die zumindest an einem Ende mit einem Federaugenkörper (6, 19, 26) verbunden ist, dadurch gekennzeichnet, daß ein Blattfederkörper aus faserverstärktem Kunststoff hergestellt wird, der zumindest an einem Federende einen Endbereich (1) mit im wesentlichen planparallen Ober- und Unterseiten (2, 3) aufweist, daß an diesen Ober- und Unterseiten (2, 3) oder zumindest an einer von ihnen, jeweils eine Kunststoffauflage aufgebracht wird, die aus einer plastischen Masse aus Verstärkungsfasern enthaltendem duromeren Kunststoff besteht und deren Dicke auf das Federende hin zunimmt, daß danach der Federaugenkörper (6, 19, 26), welcher Halterungsbereiche aufweist, die gegebenenfalls plattenförmig ausgebildet sind, auf den mit diesen Kunststoffauflagen versehenen Federkörper-Endbereich (1) aufgesetzt wird, so daß die Halterungsbereiche an diesen Auflagen anliegen und daß man min-destens eine Klemmanschette über den Federkörper-Endbereich (1) und über die an diesen anliegenden Halterungsbereiche schiebt und diese dabei auf den Federkörper-Endbereich (1) aufkeilt, wonach die Kunststoffauflagen ausgehärtet werden.

14. Verfahren nach Anspruch 13, dadurch gekennzeichnet, daß man einen Federaugenkörper (6, 19, 26) mit Halterungsbreichen einsetzt, die an ihren an die Kunststoffauflagen des Federkörper-Endbereiches (1) anliegenden Anpreßflächen (11, 12) eine gegebenenfalls durch Nuten (13) gebildete, reliefartige Oberflächenstruktur aufweisen, so daß beim Aufkeilen der Halterungsbereiche auf den Federkörper-Endbereich (1) Kunststoffmaterial aus den Auflagen in die Vertiefungen dieser Oberflächenstruktur eindringt.

## Claims

1. Leaf spring of plastic material with at least one spring eye body having at least two mounting zones, appropriately of plate-shaped form, which are arranged opposed in pairs and adjoin the top and bottom sides, respectively, of the spring body's end zone and which are wedged onto said spring body's end zone by means of at least one clamping sleeve slipped thereover, characterized in that the spring body at the spring body's end zones (1), where the spring eye bodies are wedged onto, increases in thickness towards the spring end (5').

2. Leaf spring of plastic material according to claim 1, characterized in that wedged up clamping sleeves are secured against displacement realtive to the mounting zones, appropariately by means of screws (18) and/or pins.

3. Leaf spring of plastic material according to claim 1 or 2, characterized in that the spring eye body (6, 19, 26) is braced against the blunt spring end (5').

4. Leaf spring of plastic material according to one of claims 1-3, characterized in that the spring eye body (26) has at least two parts (27, 30), separated from each other, which with their mounting zones adjoin the top and bottom side, respectively, of the spring body's end zone (1).

5. Leaf spring of plastic material according to one of claims 1 - 4, characterized in that the mounting zones, at their pressure surfaces (11, 12) adjoining the spring body's end zone (1), exhibit a relieflike surface structure, appropriately formed by grooves (13), into the recesses of which plastic material of the spring body (1) has penetrated.

6. Leaf spring of plastic material according to one of claims 1 - 5, characterized in that two clamping sleeves (14, 15) are slipped and wedged onto the same pair of mounting zones.

7. Leaf spring of plastic material according to one of claims 1 - 5, characterized in that two clamping sleeves (33, 34) are slipped and wedged onto different pairs of mounting zones.

8. Leaf spring of plastic material according to one of claims 1 - 7, wherein the spring eye body exhibits a bent piece of strip (7, 20, 27) of steel or of a fiber-reinforced plastic material, which in partial zones, appropriately its end zones, comprises the mounting zones to be wedged onto spring body's end zone (1).

9. Leaf spring of plastic material according to claim 8, characterized in that the piece of strip (7, 20,27) is joined to a spring eye bushing (8), which latter is braced directly or over an intermediate layer onto the upper or lower side (2, 3) of the spring body's end zone (1) against the blunt spring end 5'.

10. Leaf spring of plastic material according to claim 9, characterized in that the spring eye bushing (8) is arranged between two clamping sleeves (33, 34).

11. Leaf spring of plastic material according to claim 9, characterized in that the bent piece of strip (7, 20, 27) closely fits against a part of the surface of the spring eye bushing (8).

12. Leaf spring of plastic material according to one of claims 8 - 11, characterized in that the bent piece of strip is connected to the spring eye bushing (8) form-lockingly and/or frictionally.

**13.** Method for the manufacture of a leaf spring of plastic material, which is connected to a spring eye body (6, 19,26) at least at one end, characterized in that a leaf spring body is manufactured of fiber reinforced plastic material, which at least at one spring end exhibits an end zone (1) with essentially plane parallel top and bottom sides (2, 3), wherein to these top and bottom sides (2, 3) or at least to one of them, a coating of plastic material is applied, which is composed of a plastic mass of duromer plastic containing reinforcing fibers and the thickness of which increases towards the spring end, and wherein subsequently the spring eye body (6, 19, 26), which has mounting zones of appropriately laminar design, is placed on the spring body's end zone (1) provided with these coatings of plastic material, so that the mounting zones adjoin these coatings, and wherein at least one clamping sleeve is slipped over the spring body's end zone (1) and over the mounting zones adjoining it, and thereby wedging the latter onto the spring body's end zone (1), whereupon the plastic material coatings are cured.

**14.** A method according to claim 13, characterized in that a spring eye body (6, 19, 26) with mounting zones is used, which latter exhibit at their pressure surfaces (11, 12) adjoining the plastic material coatings of the spring body's end zone (1) a relieflike surface structure, appropriately formed by grooves (13), so that when the mounting zones are wedged onto the spring body's end zone (1), plastic material from the coatings penetrates into the recesses of this surface structure.

**Revendications**

**1.** Ressort à lames en matière synthétique ou plastique muni d'au moins un corps d'anneau de ressort et qui présente au moins deux zones de fixation conformées, le cas échéant, en forme de plaques et placées par paires face à face, sur les faces supérieure et inférieure de la zone d'extrémité du corps de ressort et qui sont coincés sur cette zone d'extrémité à l'aide d'au moins un collier de serrage mis en place par coulissement sur ces plaques, caractérisé en ce que le corps de ressort présente une épaisseur croissante vers les extrémités du ressort (5') dans ses zones d'extrémité (1) sur lesquelles les corps d'anneau de ressort sont coincés.

**2.** Ressort à lames en matière synthétique ou plastique selon la revendication 1, caractérisé par des colliers de serrage coincés qui sont fixés, le cas échéant, par des vis (18) et/ou des broches, pour éviter un glissement par rapport aux zones de fixation.

**3.** Ressort à lames en matière synthétique ou plastique selon la revendication 1 ou 2, caractérisé en ce que le corps d'anneau de ressort (6, 19, 26) s'appuie sur l'extrémité tronquée (5') du ressort.

**4.** Ressort à lames en matière synthétique ou plastique selon l'une des revendications 1 à 3, caractérisé en ce que le corps d'anneau de ressort (26) comporte au moins deux parties (27, 30) séparées l'une de l'autre, qui sont disposées par leurs zones de fixation sur les faces supérieure et inférieure de la zone d'extrémité du corps de ressort (1).

**5.** Ressort à lames en matière synthétique ou plastique selon l'une des revendications 1 à 4, caractérisé par des zones de fixation qui présentent sur leurs surfaces de serrage (11, 12) attenantes à la zone d'extrémité de corps de ressort (1) une structure superficielle en relief formée, le cas échéant, de rainures (13) dans les cavités desquelles pénètre le matériau synthétique du corps de ressort (1).

**6.** Ressort à lames en matière synthétique ou plastique selon l'une des revendications 1 à 5, caractérisé par deux colliers de serrage (14, 15) qui sont enfilés sur la même paire de zones de fixation et y sont calés ou coincés.

**7.** Ressort à lames en matière synthétique ou plastique selon l'une des revendications 1 à 5, caractérisé par deux colliers de serrage (33, 34), qui sont enfilés et calés ou coincés sur deux paires de fixation différentes.

**8.** Ressort à lames en matière synthétique ou plastique selon l'une des revendications 1 à 7, caractérisé en ce que le corps d'anneau de ressort comporte une pièce en bande recourbée (7, 20, 27) en acier ou en matière synthétique renforcée par des fibres, ladite pièce recourbée comportant, dans des zones partielles, le cas échéant dans ses zones d'extrémité, les zones de fixation par calage ou coincement à la zone d'extrémité de corps de ressort(1).

**9.** Ressort à lames en matière synthétique ou plastique selon la revendication 8, caractérisé en ce que la pièce en bande (7, 20, 27) est reliée à une douille d'anneau de ressort (8), qui s'appuie directement, ou par l'intermédiaire d'une pièce intercalaire (21), sur la face supérieure ou inférieure (2, 3) de la zone d'extrémité de corps de ressort (1) ou sur l'extrémité tronquée (5') du ressort.

10. Ressort à lames en matière synthétique ou plastique selon la revendication 9, caractérisé en ce que la douille d'anneau de ressort (8) est disposée entre les deux colliers de serrage (34, 33).

11. Ressort à lames en matière synthétique ou plastique selon l'une des revendications 8 à 10, caractérisé en ce que la pièce en bande (7, 20, 27) épouse la forme d'une partie de la surface d'enveloppe de la douille d'anneau de ressort (8).

12. Ressort à lames en matière synthétique ou plastique selon l'une des revendications 8 à 11, caractérisé en ce que la pièce en bande (27) est relié à la douille d'anneau de ressort par ajustement de forme et/ou à force.

13. Procédé de fabrication d'un ressort à lames en matière synthétique ou plastique qui est relié au moins à une extrémité à un corps d'anneau de ressort (6, 19, 26), caractérisé en ce qu'on fabrique un corps de ressort à lames en matière synthétique ou plastique renforcé par des fibres, qui présente au moins à une extrémité de ressort, une zone d'extrémité (1) à faces supérieure et inférieure (2, 3) sensiblement planes et parallèles, en ce qu'on dispose sur ces faces supérieure et inférieure (2, 3) ou au moins sur l'une d'entre elles, chaque fois un revêtement de matière plastique, constitué d'une masse plastique en matière plastique duromère contenant des fibres de renforcement et dont l'épaisseur croît en direction de l'extrémité du ressort, en ce que l'on applique ensuite le corps d'anneau de ressort (6, 19, 26) qui comporte des zones de fixation qui sont, le cas échéant, conformées en forme de plaques, sur la zone d'extrémité de corps de ressort (1) munie de ces revêtements en matière plastique, de manière que les zones de fixation reposent sur ces revêtements et en ce que l'on fait glisser au moins un collier de serrage sur la zone d'extrémité du corps de ressort (1) et sur les zones de fixation attenantes à celle-ci, et que l'on coince ou cale ce collier sur la zone d'extrémité de corps de ressort (1), après quoi l'on fait durcir les revêtements de matière plastique.

14. Procédé selon la revendication 13, caractérisé en ce que l'on insère un corps d'anneau de ressort (6, 19, 26) muni de zones de fixation qui présentent, sur leurs surfaces de pressage (11, 12) attenantes aux revêtements de matière plastique de la zone d'extrémité de corps de ressort (1), une structure superficielle en relief formée, le cas échéant, de rainures (13), de telle façon que, lorsque l'on coince ou cale les zones de fixation sur la zone d'extrémité de corps de ressort (1), la matière plastique des revêtements soit refoulée dans les cavités de cette structure superficielle.

_Fig. 1_

_Fig. 2_

_Fig. 3_

**Fig. 4**

**Fig. 5**

**Fig. 6**